# EUROPEAN PATENT APPLICATION

(11) **EP 1 538 817 A1**
(43) Date of publication of application: **08.06.2005**
(21) Application number: 04028744.3
(22) Date of filing: 03.12.2004
(51) Int. Cl.: H04M 1/725, H04L 12/28

(54) **Moving picture streaming file, method and system for moving picture streaming service in a mobile communication terminal**

(30) Priority: 05.12.2003 KR 2003088218
(71) Applicant: LG ELECTRONICS INC., Seoul (KR)
(72) Inventor: Park, Seong-Jun, Nowon-Gu Seoul (KR)
(74) Representative: von Hellfeld, Axel, Dr. Dipl.-Phys.

(57) **Abstract**

The present invention discloses a moving picture streaming file, method and system for a moving picture streaming service of a mobile communication terminal. A wireless moving picture streaming file is generated by adding audio payload data to an MJPEG moving picture file, and adding payload headers for controlling streaming of each payload data. When the mobile communication terminal requests the streaming service, a server provides the previously-generated wireless moving picture streaming file to the mobile communication terminal. The mobile communication terminal plays the payload data by using payload header information of the wireless moving picture streaming file. The mobile communication terminal controls transmission of the payload data consisting of a plurality of segments by using segment headers. Therefore, the wireless moving picture streaming service can be rapidly reliably provided to the mobile communication terminal by using the MJPEG and a user datagram protocol.

## Description

### BACKGROUND OF THE INVENTION

### 1. Field of the Invention

The present invention relates to a method and system for providing a moving picture streaming service through a mobile communication terminal, and a moving picture streaming file format for the service.

### 2. Description of the Background Art

In general, streaming is one of the multimedia data transmission methods which reads, transmits and plays data on an internet in a real time. The streaming technology allows the user to watch or listen to a large capacity of video or audio data on the internet in the real time without downloading the data to a PC.

The technology for embodying moving picture streaming is roughly divided into a moving picture compression algorithm and a network protocol. Exemplary moving picture compression algorithms include Moving Picture Experts Group (MPEG) and H.26x, and exemplary network protocols include a Real time Transport Protocol (RTP) and a Real Time Control Protocol (RTCP).

The MPEG and the H.26x are hybrid compression methods of motion compensation compression and DCT loss compensation. The motion compensation compression estimates motion by using a difference between a previous frame and a current frame, and compensates for the estimated motion. The DCT loss compression separates an image into a low frequency component having visually important information and a high frequency component having visually less important information, and applies loss to the low frequency component.

The RTP which is a protocol for transmitting multimedia data has a structure for discerning a receive sequence number from a payload. The RTCP defined as detailed specifications of the RTP monitors and manages RTP data transmission.

The moving picture compression standard is characterized by basically using the DCT loss compression and the motion compensation compression, and additionally using a quantized matrix algorithm and Huffman/Runlength compression algorithm. The quantized matrix algorithm improves compression efficiency by quantizing a DCTed DCT coefficient by using the fact that the image is mostly concentrated on the low frequency component. The Huffman/Runlength compression algorithm, which transforms a fixed length code into a variable length code, makes an average code length smaller than a fixed length of an original symbol by allocating a short code to a frequently-generated symbol and a long code to a rarely-generated symbol.

The moving picture compression algorithms such as the MPEG and the H.26x and the network protocols such as the RTP and the RTCP are generally used on a wire network.

On the other hand, as the mobile communication service gets diversified, there are increasing demands for a wireless moving picture streaming service using a mobile communication terminal. However, the moving picture compression algorithms such as the MPEG and the H.26x and the network protocols such as the RTP and the RTCP that have been generally used on the wire network environment cannot be applied to a mobile communication network environment due to many restrictions.

That is, the mobile communication network environment has some specific restrictions such as multi-channel fading, handoff and power attenuation. Especially, as compared with a wire network terminal (for example, PC), the mobile communication terminal has an inferior central processing unit and a small memory, and shows a low memory access speed.

It is thus impossible to apply the general moving picture compression algorithm and network protocol to the mobile communication terminal. A high specification high-priced mobile communication terminal environment is required to solve the above problem.

When the moving picture streaming service of the mobile communication terminal is provided by using the general moving picture compression algorithm and network protocol, images are often interrupted due to the aforementioned restrictions of the mobile communication network. As a result, quality of the service is considerably reduced. In addition, while the moving pictures are transmitted on the wireless network by using the general moving picture compression algorithm and network protocol, if deadlock occurs, a retransmission-requested frame and a reference frame must be transmitted together according to characteristics of the motion compensation algorithm. It is thus difficult to provide the streaming service.

### SUMMARY OF THE INVENTION

Therefore, an object of the present invention is to provide a moving picture streaming file, method and system for a moving picture streaming service of a mobile communication terminal which can encode and decode video data and audio data by using the moving picture streaming file, by storing information for recognizing the moving picture streaming file in a header of the moving picture streaming file, and storing payload data played in the moving picture streaming service and payload headers for controlling and managing streaming of the payload data in a payload of the moving picture streaming file.

Another object of the present invention is to provide a moving picture streaming file, method and system for a moving picture streaming service of a mobile communication terminal which can rapidly reliably transmit payload data of the moving picture streaming file, by dividing the payload data into a plurality of segments, and forming segment headers for controlling transmission in each segment.

Yet another object of the present invention is to provide a moving picture streaming file, method and system for a moving picture streaming service of a mobile communication terminal which can efficiently handle deadlock by fading of a wireless network, reduce a memory usage of the mobile communication terminal and improve a transmission speed, by omitting motion compensation by decoding a single frame without a reference frame.

To achieve these and other advantages and in accordance with the purpose of the present invention, as embodied and broadly described herein, there is provided a wireless moving picture streaming file for a moving picture streaming service of a mobile communication terminal, including: a file header for recognizing the wireless moving picture streaming file; and a payload having video payload data and audio payload data compressed according to the MJPEG, and payload headers for controlling streaming in each video payload data and each audio payload data.

According to another aspect of the present invention, a system for a moving picture streaming service of a mobile communication terminal includes: a streaming contents generator for generating content for the wireless moving picture streaming service, by wireless moving picture streaming-encoding video frames and audio data played by streaming according to the MJPEG; a contents server for storing and managing the generated content; a wireless application protocol server for searching the content requested by the mobile communication terminal in the contents server, and providing the searched content to the mobile communication terminal by streaming; and the mobile communication terminal for providing the wireless moving picture streaming service to a user, by wireless moving picture streaming-decoding the content according to the MJPEG.

The wireless moving picture streaming-encoding operation of the streaming contents generator divides the video frames and audio data compressed according to the MJPEG into a plurality of segments, generates segment header for controlling transmission in each segment, generates payload headers for controlling streaming of the video frames, generates payload header for controlling streaming of the audio data, and generates a file header for recognizing the content for the wireless moving picture streaming service.

The wireless moving picture streaming-decoding operation of the mobile communication terminal recognizes content streaming for the wireless moving picture streaming service by using the file header information of the content, and plays the payload data by using the payload header information of the content. The mobile communication terminal controls transmission of the segment data of the payload data with the wireless application protocol server by using the segment header information of the payload data.

According to yet another aspect of the present invention, a method for a moving picture streaming service of a mobile communication terminal comprises: requesting a wireless moving picture streaming service to a server; receiving a moving picture streaming file from the server through a user datagram protocol; recognizing the moving picture streaming file by using a file header of the moving picture streaming file; and playing video frames and audio data of payload data of the moving picture streaming file by using payload headers of the moving picture streaming file.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a view illustrating a format of a wireless moving picture streaming file in accordance with the present invention;
Fig. 2 is a view illustrating a format of a payload header in accordance with the present invention;
Fig. 3 is a view illustrating a format of a payload data in accordance with the present invention;
Fig. 4 is a view illustrating an MSW system in accordance with the present invention; and
Fig. 5 is a view illustrating a software structure of a mobile communication terminal in accordance with the present invention.

### DETAILED DESCRIPTION OF THE PREFERRED EMBODIMENTS

In general, the Motion Joint Photographic Experts Group (MJPEG) applies the JPEG that is still image compression to moving picture compression. Each of the frames of the MJPEG is compressed according to the JPEG. The JPEG, that is the international standard for continuous tone still image compression defined by the Committee Consultative International Telegraphy and Telephony (CCITT) and the International Organization for Standardization (ISO), specifies requirements for compressing almost all two-dimensional still images such as gray level images or color images except binary images.

The MJPEG compresses each of the frames as single frames regardless of preceding and succeeding frames, and also compresses moving picture play information, thereby attaining a higher compression ratio than the MPEG. In addition, the MJPEG can control quality of image by adjusting the compression ratio during the compression, and perform rapid compression due to small calculations.

In accordance with the present invention, a wireless moving picture streaming service is provided by using a moving picture streaming file compressed not by the motion compensation compression but by the MJPEG, and moving pictures are rapidly reliably transmitted through a User Datagram Protocol (UDP), by adding an audio payload to the moving picture file based on the MJPEG, forming payload headers for controlling and managing streaming of payload data in each payload data, and dividing each of the payload data into a plurality of segments for transmission control.

Reference will now be made in detail to the preferred embodiments of the present invention, examples of which are illustrated in the accompanying drawings.

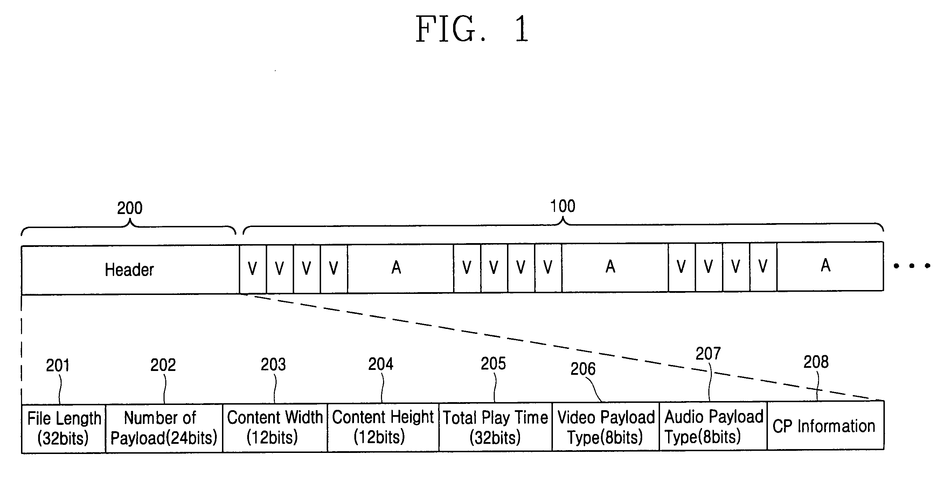

Fig. 1 is a view illustrating a format of a wireless moving picture streaming file for a wireless moving picture streaming service of a mobile communication terminal in accordance with the present invention.

Referring to Fig. 1, the wireless moving picture streaming file is formed by adding audio data to a payload of a general MJPEG moving picture file. That is, the wireless moving picture streaming file includes a payload 100 consisting of a plurality of video frames V and audio data A played by moving picture streaming, and a file header 200 for recognizing the moving picture streaming file.

The file header 200 is comprised of:
1) file length (32bits) 201
2) number of payload (24bits) 202
3) content width (12bits) 203
4) content height (12bits) 204
5) total play time (32bits) 205
6) video payload type (8bits) 206
7) audio payload type (8bits) 207
8) Contents Provider (CP) information (field length is variable) 208

In the payload 100, one vide payload data V implies one video frame, and one audio payload data A implies a predetermined length of audio data. The payload 100 is filled by adding the audio data A played for a first time to the plurality of video frames V played for the first time, and adding the audio data A played for a second time to the plurality of video frames V played for the second time.

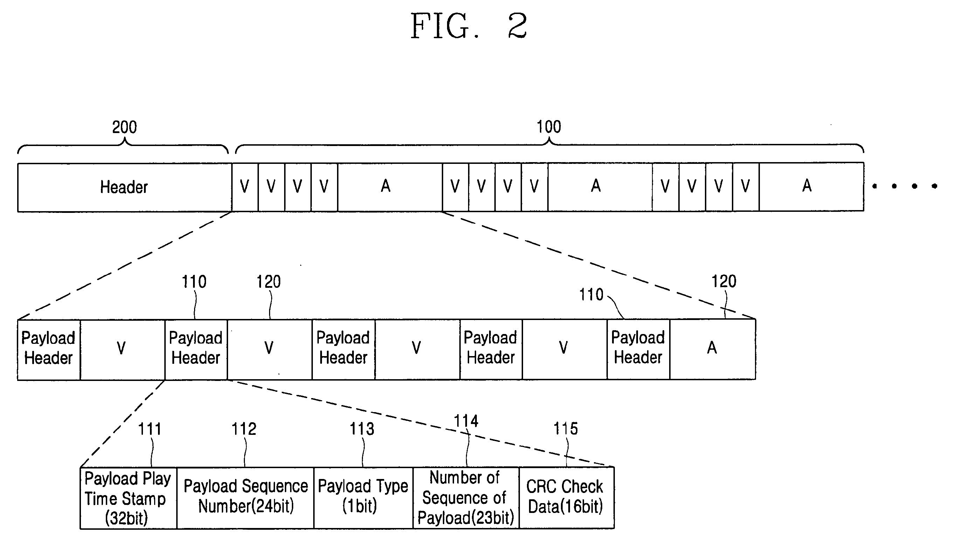

As illustrated in Fig. 2, the payload 100 includes payload headers 110 in each of the video frames 120 and each of the audio data 120.

Each of the payload headers 110 is comprised of:
1) payload play time stamp (32bits) 111
2) payload sequence number (24bits) 112
3) payload type (1bit) 113
4) number of segments of payload (23bits) 114
5) Cyclic Redundancy Check (CRC) data (16bits) 115

The payload play time stamp 111 is used with the frame play time stamp to synchronize the video frames 120 with the audio data 120.

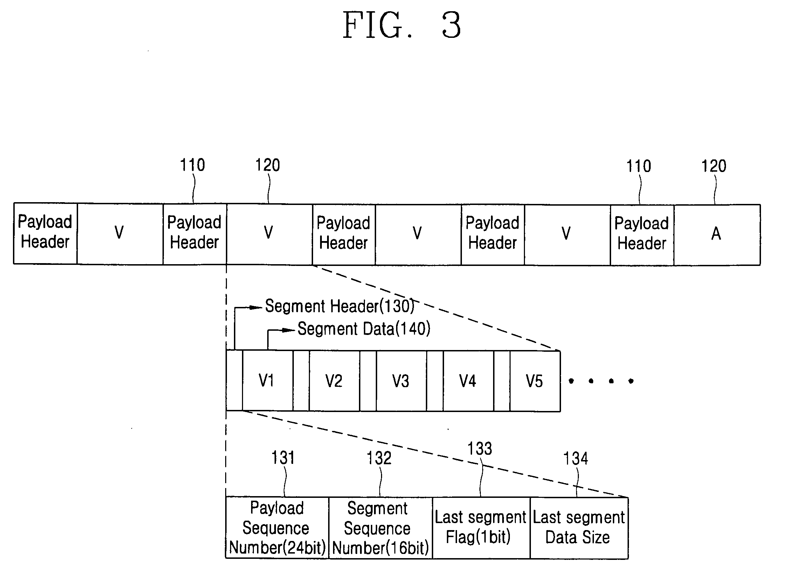

As depicted in Fig. 3, each of the video frames 120 and each of the audio data 120 are divided into a plurality of segments, and the segments are comprised of segment headers 130 and segment data 140, respectively. The size of each of the segments is fixed, for example, to 512bytes. In accordance with the present invention, each video frame and each audio data of the moving picture streaming file transmitted through the UDP can be transmitted under the control, by dividing each video frame and each audio data into the plurality of segments, and controlling transmission of the segments by using the segment headers.

Each of the segment headers 130 is comprised of:
1) payload sequence number (24bits) 131
2) segment sequence number (16bits) 132
3) last segment flag (1 bit) 133
4) last segment data size (7bits) 134

When the wireless moving picture streaming file is transmitted through the UDP, the transmission order of the segments may be changed due to characteristics of the UDP. Therefore, the payload sequence number 131 and the segment sequence number 132 must be transmitted with the segments. In addition, for example, when the last segment flag 133 has a value of '0', it means that the current segment is not the last segment of the payload, and when the last segment flag 133 has a value of '1', it means that the current segment is the last segment of the payload. In the case that the current segment is not the last segment, the last segment data size 134 is meaningless, and thus the whole seven bits are filled with '0'.

In accordance with the present invention, the wireless moving picture streaming file improves and expands the MJPEG that is an intermediate step between moving picture compression and still image compression to be suitable for the wireless moving picture streaming service. The wireless moving picture streaming file additionally includes the audio payload data, adds the payload headers to each of the payload data to embody the streaming service, and divides each of the payload data into the plurality of segments for transmission control.

Hereinafter, a system for providing the wireless moving picture streaming service to the mobile communication terminal by using the wireless moving picture streaming file is defined as a Multimedia Streaming for Wireless (MSW) system, an encoder for encoding the wireless moving picture streaming file (or MSW file) for the wireless moving picture streaming service is defined as an MSW encoder, and a decoder for decoding the wireless moving picture streaming file for the wireless moving picture streaming service is defined as an MSW decoder.

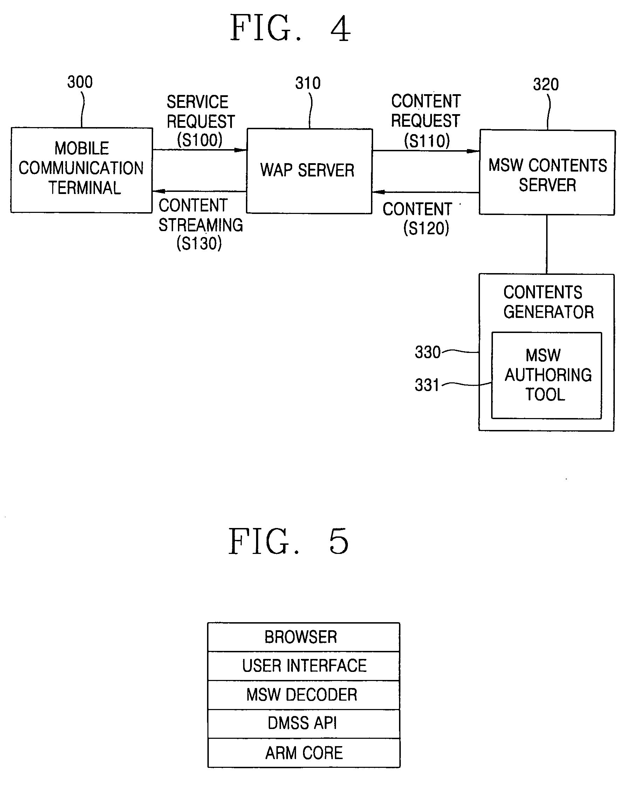

Fig. 4 illustrates the MSW system in accordance with the present invention. The MSW system includes a mobile communication terminal 300 for requesting and receiving a wireless moving picture streaming service, a Wireless Application Protocol (WAP) server 310 for performing content streaming for the wireless moving picture streaming service through wireless access to the mobile communication terminal 300, an MSW contents server 320 for providing the content to the WAP server 310 according to the content request signal from the WAP server 310, and a contents generator 330 for generating the content by MSW encoding, and storing the content in the MSW contents server 320.

As illustrated in Fig. 5, the mobile communication terminal has a software structure of an Advanced RISC Machines (ARM) core for performing CPU functions, a Dual Mode Subscriber Software (DMSS) Application Program Interface (API) for supporting an MSW Codec program, an MSW decoder for decoding an MJPEG moving picture streaming file, a user interface for interfacing with the user, and a browser.

The contents generator 330 consists of a PC, and the PC generates MSW content by using an MSW authoring tool 331 for encoding a wireless moving picture streaming file by MSW encoding.

The operation of the MSW system in accordance with the present invention will now be described.

The contents generator 330 generates the MSW content by using the MSW authoring tool 331. That is, the PC generates the wireless moving picture streaming file by using the MSW encoder of the MSW authoring tool 331. In detail, the PC divides the video frames and the audio data for the streaming service in a segment data size, stores the divided frames and data in the plurality of segment data, adds the segment headers for controlling transmission of the segment data to the segment data, respectively, stores the plurality of segment data and segment headers corresponding to the video frames in the video payload data fields, generates the payload headers for the video payload data, stores the plurality of segment data and segment headers corresponding to the audio data in the audio payload data fields, and generates the payload headers for the audio payload data. The PC generates the payload by using the payload headers and the payload data for the video frames and the payload headers and the payload data for the audio data, and generates the file header for the payload, thereby generating the wireless moving picture streaming file for the wireless moving picture streaming service.

The PC 330 stores the MSW content consisting of the wireless moving picture streaming file in the MSW contents server 320.

Thereafter, when the user requests the wireless moving picture streaming service through the mobile communication terminal 300 (S100), the WAP server 310 requests the corresponding MSW content to the MSW contents server 320 providing the wireless moving picture streaming service upon the user's request (S110). The MSW contents server 320 provides the MSW content to the WAP server 310 (S120). The WAP server 310 transmits the wireless moving picture streaming file of the MSW content to the mobile communication terminal 300 (S130). Here, the wireless moving picture streaming file is transmitted through the UDP between the WAP server 310 and the mobile communication terminal 300.

The MSW decoder of the mobile communication terminal 300 recognizes content streaming for the wireless moving picture streaming service by using the file header information of the wireless moving picture streaming file, and plays the payload data by using the payload header information of the wireless moving picture streaming file. When receiving the payload data through the UDP, the mobile communication terminal 300 controls transmission of the segment data of the payload data by using the segment header information of the payload data, so that the payload data divided into the plurality of segment data can be aligned and played in the transmission order.

Accordingly, even though the wireless moving picture streaming file is transmitted through the UDP by wireless, the wireless moving picture streaming file can be rapidly reliably transmitted by transmission control using the segment headers of the payload data.

As discussed earlier, in accordance with the present invention, the wireless moving picture streaming file includes the file header for recognizing the wireless moving picture streaming file, the payload data divided into the segment data and the segment headers for transmission control, and the payload headers for controlling and managing streaming of the payload data. Therefore, the wireless moving picture streaming file can be rapidly reliably transmitted through the UDP, and the moving pictures can be compressed and played according to the MJPEG.

In addition, since the motion compensation compression generally used for moving picture compression is not adopted, when the deadlock occurs by fading of the wireless network, it can be easily overcome by retransmitting the moving picture frames for the current image, without referring to the preceding or succeeding image, namely, the reference image. The structure of the decoder of the mobile communication terminal is simplified by omitting a frame memory for storing reference images, and receiving and playing the independent image. Moreover, the RAM usage of the mobile communication terminal is reduced by omitting Group Of Picture (GOP) unit file access by motion compensation.

Furthermore, the wireless moving picture streaming service is provided to the mobile communication terminal by using the expanded MJPEG moving picture file, which decreases the ROM usage of the mobile communication terminal.

Because the wireless moving picture streaming file does not have information for the many-to-many multicast environment such as a synchronization sender ID, the system is optimized for the one-to-many broadcast environment, for attaining a high transmission speed.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A wireless moving picture streaming file for a moving picture streaming service of a mobile communication terminal, comprising:
a file header for recognizing the wireless moving picture streaming file; and
a payload including video payload data and audio payload data compressed according to the MJPEG, and payload headers for controlling streaming in each video payload data and each audio payload data.

2. The file of claim 1, wherein the file header comprises:
a total file length of the moving picture streaming file;
a total number of the payloads;
a width of content for the streaming service;
a height of the content;
a total play time of the content;
an encoding type of video frames of the content;
an encoding type of audio data of the content; and
information of a contents provider providing the content.

3. The file of claim 1, wherein each of the payload headers comprises:
a play time stamp of the current payload;
a sequence number of the current payload;
a type of the current payload;
a total number of segments of the current payload; and
a cyclic redundancy check data for checking integrity of the current payload.

4. The file of claim 1, wherein the video payload data and the audio payload data are divided into a plurality of segments for transmission control, respectively, and each segment is comprised of segment header and segment data.

5. The file of claim 4, wherein transmission of the segments is controlled by using the segment headers.

6. The file of claim 5, wherein each of the segment headers comprises:
a sequence number of the payload to which the current segment belongs;
a sequence number of the current segment;
a flag data for checking whether the current segment is the last segment of the payload; and
data size of the last segment.

7. The file of claim 1, wherein the payload comprises a plurality of video frames played for a first period and a predetermined length of audio data synchronized with the plurality of video frames, and wherein a total play time of the wireless moving picture streaming file is divided into predetermined periods and the first period is one of the predetermined periods.

8. A system for a moving picture streaming service of a mobile communication terminal, comprising:
a streaming contents generator for generating content by wireless moving picture streaming-encoding video frames and audio data according to the MJPEG;
a contents server for storing and managing the generated content;
a wireless application protocol server for searching the content requested by the mobile communication terminal in the contents server, and providing the searched content to the mobile communication terminal by streaming; and
the mobile communication terminal for providing the wireless moving picture streaming service to a user, by wireless moving picture streaming-decoding the content according to the MJPEG.

9. The system of claim 8, wherein the content consist of a wireless moving picture streaming file,
wherein the wireless moving picture streaming file adds audio payload data to an MJPEG moving picture file, and has payload headers for controlling and managing streaming of the payload data.

10. The system of claim 9, wherein the payload data are divided into a plurality of segments for transmission control, and each segment is comprised of segment header and segment data.

11. The system of claim 8, wherein the content is transmitted through a user datagram protocol between the mobile communication terminal and the wireless application protocol server.

12. The system of claim 8, wherein the wireless moving picture streaming-encoding operation divides the video frames and audio data compressed according to the MJPEG into a plurality of segments, generates segment header for controlling transmission in each segment, generates payload headers for controlling streaming of the video frames, generates payload header for controlling streaming of the audio data, and generates a file header for recognizing the content for the wireless moving picture streaming service.

13. The system of claim 8, wherein the wireless moving picture streaming-decoding operation recognizes content streaming for the moving picture streaming service by using file header information of the content, plays the payload data by using payload header information of the content, and controls transmission of the segment data of the payload data by using segment header information of the payload data.

14. A method for a moving picture streaming service of a mobile communication terminal, comprising:
requesting a wireless moving picture streaming service to a server;
receiving a moving picture streaming file from the server through a user datagram protocol;
recognizing the moving picture streaming file by using a file header of the moving picture streaming file; and
playing video frames and audio data of payload data of the moving picture streaming file by using payload headers of the moving picture streaming file.

15. The method of claim 14, further comprising controlling transmission of segment data of the payload data between the mobile communication terminal and the server by using segment headers of the payload data.

16. The method of claim 14, wherein the moving picture streaming file divides the video frames and the audio data into a plurality of segments, and comprises segment headers for transmission control in each segment, video payload headers for controlling streaming of the video frames, audio payload headers for controlling streaming of the audio data, and a file header for recognizing the content for the wireless moving picture streaming service.

17. The method of claim 16, wherein the file header comprises:
a total file length of the moving picture streaming file;
a total number of the payloads;
a width of content for the streaming service;
a height of the content;
a total play time of the content;
an encoding type of video frames of the content;
an encoding type of audio data of the content; and
information of a contents provider providing the content.

18. The method of claim 16, wherein the video payload headers and the audio payload headers each respectively comprise:
a play time stamp of the current payload;
a sequence number of the current payload;
a type of the current payload;
a total number of segments of the current payload; and
a cyclic redundancy check data for checking integrity of the current payload.

19. The method of claim 16, wherein each of the segment headers comprises:
a sequence number of the payload to which the current segment belongs;
a sequence number of the current segment;
a flag data for checking whether the current segment is the last segment of the payload; and
size information of data of the last segment.

20. The method of claim 14, wherein the video frames are independent frames encoded without reference frames.
